# EUROPEAN PATENT APPLICATION

(11) **EP 4 236 155 A1**
(43) Date of publication of application: **30.08.2023**
(21) Application number: 21883336.6
(22) Date of filing: 22.10.2021
(51) Int. Cl.: H04L 5/00, H04L 1/16, H04L 1/00, H04W 72/12

(54) **METHOD AND DEVICE FOR TRANSMITTING AND RECEIVING SIGNAL IN WIRELESS COMMUNICATION SYSTEM**

(30) Priority: 22.10.2020 KR 20200137781; 05.08.2021 KR 20210103350
(71) Applicant: LG Electronics Inc., Yeongdeungpo-gu Seoul, 07336 (KR)
(72) Inventor: YANG, Suckchel, Seoul 06772 (KR); KIM, Seonwook, Seoul 06772 (KR); BAE, Duckhyun, Seoul 06772 (KR)
(74) Representative: Maikowski & Ninnemann Patentanwälte Partnerschaft mbB
(86) International application number: PCT/KR2021/014907
(87) International publication number: WO 2022/086269

(57) **Abstract**

A terminal performing uplink transmission according to an embodiment of the present disclosure performs multiplexing for a plurality of uplink channels satisfying minimum processing time, wherein, on the basis that simultaneous transmission of PUCCH-PUSCH is configured and multiplexing of uplink channels having different priorities from one another is configured, a first PUCCH is obtained by multiplexing PUCCHs having the same first priority from among the plurality of uplink channels, and at least one uplink signal can be obtained on the basis of the remaining channels from among the plurality of uplink channels and the first PUCCH.

## Description

### [Technical Field]

The present disclosure relates to a wireless communication system, and more particularly, to a method and apparatus for transmitting/receiving an uplink/downlink wireless signal in a wireless communication system.

### [Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### [Disclosure]

### [Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### [Technical Solution]

According to an aspect of the present disclosure, a method of transmitting a signal by a user equipment (UE) in a wireless communication system includes multiplexing a plurality of uplink channels that satisfy a minimum processing time supported by the UE for uplink transmission, and transmitting at least one uplink signal based on the multiplexing of the plurality of uplink channels. In the multiplexing of the plurality of uplink channels, based on that simultaneous transmission of physical uplink control channel (PUCCH)-physical uplink control channel (PUSCH) is configured in the UE and multiplexing of uplink channels having different priorities is configured, the UE acquires a first PUCCH by multiplexing PUCCHs having a same first priority among the plurality of uplink channels and acquires the at least one uplink signal based on a remaining channel among the plurality of uplink channels and the first PUCCH.

The UE may acquire a second PUCCH by multiplexing PUCCHs having the same second priority and acquire the at least one uplink signal based on the first PUCCH and the second PUCCH.

Based on that a PUSCH of any priority is not included in the plurality of uplink channels, the UE may acquire a single final PUCCH from a first PUCCH of the first priority and a second PUCCH of the second priority.

In the multiplexing of the plurality of uplink channels, based on that at least one PUSCH having the first priority is included in the plurality of uplink channels, the UE may acquire a first PUSCH to which the first PUCCH is piggybacked.

The UE may simultaneously transmit the first PUSCH having the first priority and a channel having a second priority.

The channel having the second priority may be a PUCCH, and the UE may simultaneously transmit the first PUSCH having the first priority and a PUCCH having the second priority.

The channel having the second priority may be a PUSCH, and the UE may simultaneously transmit the first PUSCH having the first priority and a PUSCH having the second priority.

At least one PUCCH having the second priority may be piggybacked to the PUSCH having the second priority.

The UE may be configured to perform simultaneous transmission of PUCCH-PUSCH having different priorities

According to an aspect of the present disclosure, a UE for performing the aforementioned method of transmitting a signal may be provided.

According to an aspect of the present disclosure, a device for controlling a UE for performing the aforementioned method of transmitting a signal may be provided.

According to an aspect of the present disclosure, a method of receiving a signal by a base station (BS) in a wireless communication system includes transmitting configuration for uplink to a user equipment (UE) via higher layer signaling, and receiving at least one uplink signal from the UE based on the configuration for uplink. The at least one received uplink signal is multiplexed for a plurality of uplink channels that satisfy a minimum processing time supported by the UE, and through the configuration for uplink, based on that simultaneous transmission of physical uplink control channel (PUCCH)-physical uplink control channel (PUSCH) is configured in the UE and multiplexing of uplink channels having different priorities is configured, the BS acquires a first PUCCH in which PUCCHs having a same first priority among the plurality of uplink channels are multiplexed.

According to an aspect of the present disclosure, a base station (BS) for performing the aforementioned method of receiving a signal may be provided.

### [Advantageous Effects]

According to the present disclosure, wireless signal transmission and reception may be efficiently performed in a wireless communication system.

The present disclosure is not limited to what has been particularly described hereinabove and other advantages of the present disclosure will be more clearly understood from the following detailed description taken in conjunction with the accompanying drawings.

### [Description of Drawings]

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 illustrates physical channels used in a 3rd generation partnership project (3GPP) system as an exemplary wireless communication system, and a general signal transmission method using the same;
FIG. 2 illustrates a radio frame structure;
FIG. 3 illustrates a resource grid of a slot;
FIG. 4 illustrates exemplary mapping of physical channels in a slot;
FIG. 5 illustrates an exemplary acknowledgment/negative acknowledgment (ACK/NACK) transmission process;
FIG. 6 illustrates an exemplary physical uplink shared channel (PUSCH) transmission process;
FIG. 7 illustrates an example of multiplexing control information in a PUSCH;
FIGS. 8 and 9 illustrate transmission of UL channels having different priorities according to an embodiment of the present disclosure;
FIG. 10 illustrates a signal transmission and reception method according to an embodiment of the present disclosure;
FIGS. 11 to 14 illustrate an example of a communication system 1 and wireless devices applied to the present disclosure; and
FIG. 15 illustrates an exemplary discontinuous reception (DRX) operation applicable to the present disclosure.

### [Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent idea or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

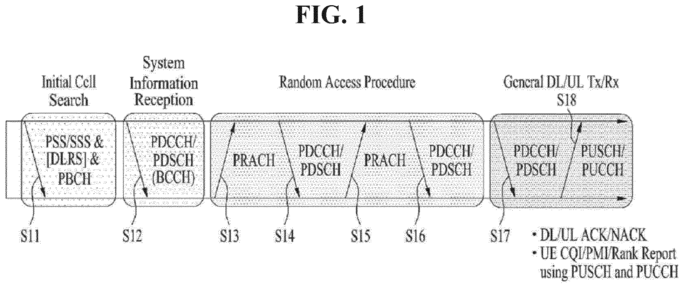

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

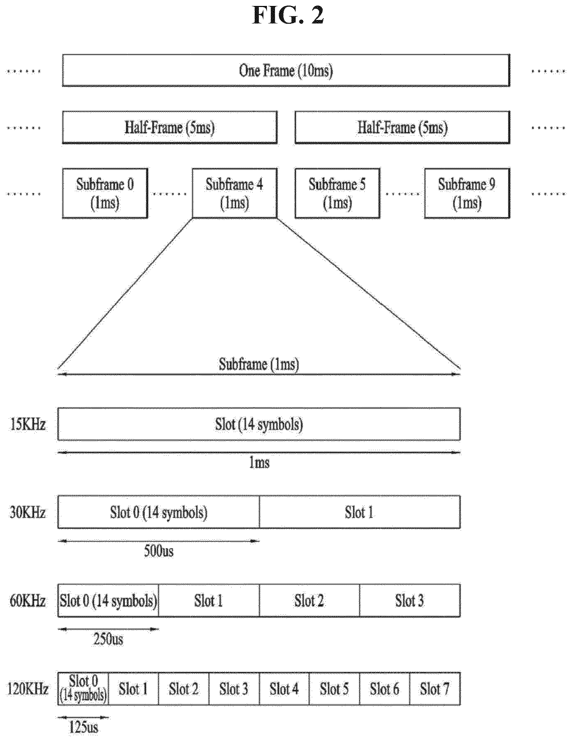

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15^{∗}2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}slot: Number of slots in a subframe | | | |

Table 2 illustrates that the number of symbols per slot, the number of slots per frame, and the number of slots per subframe vary according to the SCS when the extended CP is used.

**[Table 2]**

| SCS (15^{∗}2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

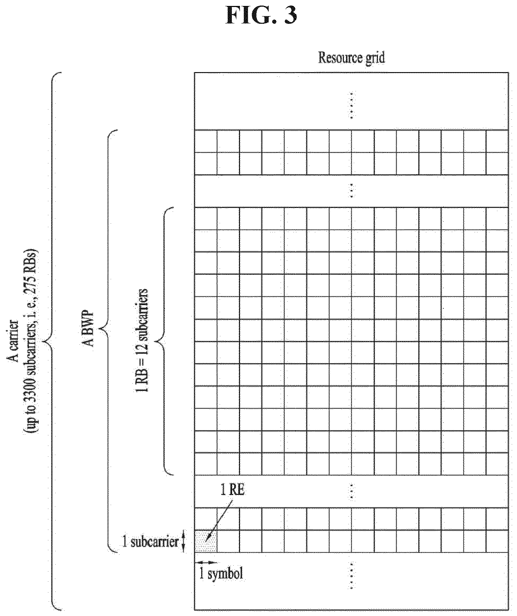

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

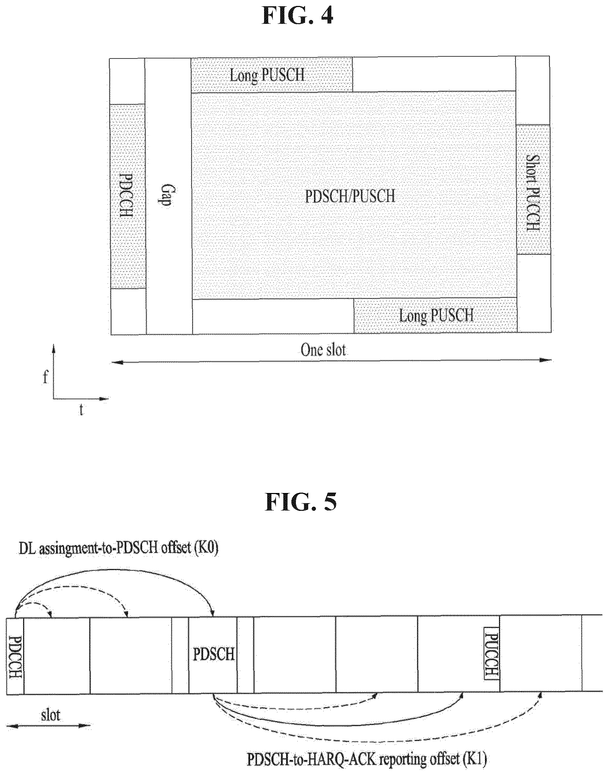

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0 0 | Scheduling of PUSCH in one cell |
| 0 1 | Scheduling of PUSCH in one cell |
| 1 0 | Scheduling of PDSCH in one cell |
| 1 1 | Scheduling of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

System information SIB1 broadcast in a cell may include PDSCH-ConfigCommon that is cell-specific PDSCH configuration information. The PDSCH-ConfigCommon may include pdsch-TimeDomainAllocationList that is a list of parameters related to time domain resource allocation of a PDSCH (or look-up table). The pdsch-TimeDomainAllocationList may include up to 16 entries (or rows) formed by jointly encoding each of {K0, PDSCH mapping type, PDSCH start symbol and length (SLIV)}. Separately from (In addition to) the pdsch-TimeDomainAllocationList configured through the PDSCH-ConfigCommon, pdsch-TimeDomainAllocationList may also be provided through PDSCH-Config that is UE-specific PDSCH configuration. UE-specifically configured pdsch-TimeDomainAllocationList may have the same structure as UE-commonly provided pdsch-TimeDomainAllocationList. For K0 and SLIV of the pdsch-TimeDomainAllocationList, reference will be made to a description below including FIG. 5.

The PUCCH delivers uplink control information (UCI). The UCI includes the following information.
- SR(Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols PUCCF N_{symb} | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary PDSCH reception and ACK/NACK transmission process therefor. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot. As mentioned above, a row index of pdsch-TimeDomainAllocationList provided UE-commonly or UE-specifically, can be indicated by a TDRA field.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #nl=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

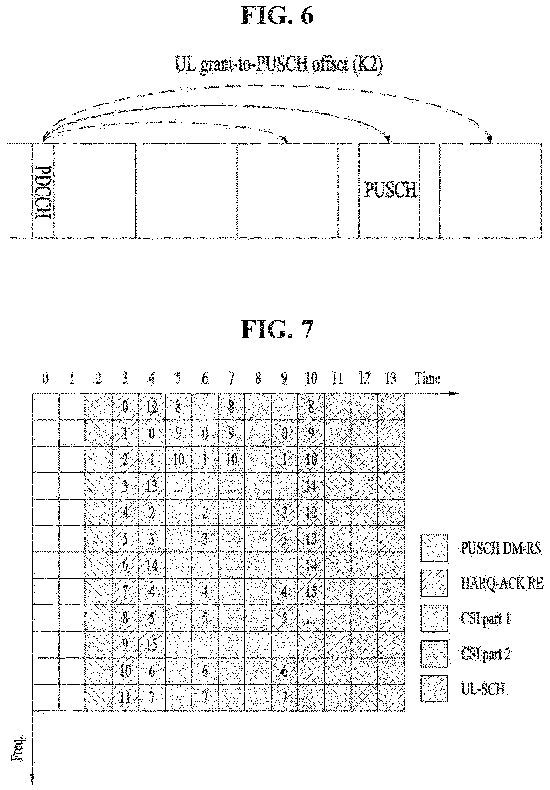

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

FIG. 7 illustrates exemplary multiplexing of UCI in a PUSCH. When a plurality of PUCCH resources overlap with a PUSCH resource in a slot and a PUCCH-PUSCH simultaneous transmission is not configured in the slot, UCI may be transmitted on a PUSCH (UCI piggyback or PUSCH piggyback), as illustrated. In the illustrated case of FIG. 7, an HARQ-ACK and CSI are carried in a PUSCH resource.

### Simultaneous UL transmission for supporting URLLC

To recently support data transmission/services to which reliability/latency performance is important, such as URLLC, a service/protection priority (e.g., low priority (LP) or high priority (HP)) may be configured semi-statically for the UE (by RRC signaling or the like) or indicated dynamically to the UE (by DCI/MAC signaling).

Specifically, a priority indicator has been introduced to some DCI formats (e.g., DCI format 1_1/1_2 for DL, and DCI format 0_1/0_2 for UL) in NR Rel. 16. When it is configured by higher-layer signaling that the priority indicator will be provided for a corresponding DCI format, the UE performs blind-decoding for the DCI format, assuming the existence of the priority indicator. Without explicit signaling indicating that the priority indicator will be used for the DCI format by higher-layer signaling, the UE performs blind-decoding, assuming that a priority indicator field is not included in the DCI format. When no priority information is provided for a corresponding DL/LTL signal, the UE may assume that the DL/LTL signal has the LP (e.g., priority index = 0). Those skilled in the art will understand that the priority indicator of DCI is a merely one of various means for indicating/configuring a priority, not the sole method.

In an example of the above prioritization, a lower priority index may be configured/indicated for the LP, and a higher priority index may be configured/indicated for the HP, or a lower bit value (e.g., bit '0') may be configured/indicated for the LP, and a higher bit value (e.g., bit ' 1') may be configured/indicated for the HP.

For example, a priority (e.g., LP or HP) may be configured/indicated for each PUCCH/PUSCH resource configured/indicated for each UCI type (e.g., HARQ-ACK, SR, and/or CSI) or for a corresponding UCI transmission. For example, the LP/HP may be indicated for an HARQ-ACK for a PDSCH by DL grant DCI that schedules the PDSCH. For example, the LP/HP may be indicated for (aperiodic) CSI by DCI (e.g., UL grant DCI scheduling a PUSCH).

In an example, (i) a PUCCH resource set may be configured independently for each priority, and/or (ii) a maximum UCI coding rate for PUCCH transmission may be configured independently for each priority. In an example, (iii) a beta offset β_{offset} for encoding UCI on a PUSCH may be configured independently for each priority and/or (iv) an HARQ-ACK codebook type may be configured independently for each priority. At least one or a combination of (i) to (iv) may be used.

In the existing Rel-10 LTE-A, an operation in which a UE simultaneously transmits a PUCCH and a PUSCH through the same time point (the same time resource or TTI) (e.g., subframe) has been introduced, and whether such simultaneous transmission of PUCCH + PUSCH is possible or not is defined in the form of UE capability. Accordingly, an eNB may configure PUCCH + PUSCH simultaneous transmission ON/OFF to a UE that has the corresponding capability (i.e., reports to the eNB that the corresponding capability exists), and the UE performs a UL transmission operation corresponding to the corresponding configuration (e.g., if the corresponding configuration is "ON", PUCCH + PUSCH simultaneous transmission is performed, whereas if the corresponding configuration is "OFF", an operation of PUCCH only or PUSCH only as in the existing (Rel-8 LTE or Rel-15 NR) is performed). UCI and UL channel transmission operations of the UE according to the PUCCH+PUSCH simultaneous transmission ON/OFF configuration are summarized as follows.
1) When PUCCH+PUSCH simultaneous transmission OFF is configured:
   A. If a HARQ-ACK PUCCH and a PUSCH overlap at the same time, the UE may piggyback and transmit HARQ-ACK on a PUSCH (i.e., HARQ-ACK on PUSCH).
   B. If a Periodic CSI PUCCH and a PUSCH overlap at the same time, the UE may piggyback and transmit a periodic CSI (P-CSI) on a PUSCH (i.e., P-CSI on PUSCH).
   C. If HARQ-ACK, a P-CSI, and a PUSCH overlap at the same time, the UE may piggyback and transmit both HARQ-ACK and a P-CSI on a PUSCH (i.e., {HARQ-ACK + P-CSI} on PUSCH).
2) When PUCCH+PUSCH simultaneous transmission ON is configured:
   A. If a HARQ-ACK PUCCH and a PUSCH overlap at the same time, the UE may simultaneously transmit HARQ-ACK on PUCCH and a pure PUSCH (i.e., HARQ-ACK PUCCH + pure PUSCH).
   B. If a Periodic CSI PUCCH and a PUSCH overlap at the same time, the UE may simultaneously transmit a P-CSI on PUCCH and a pure PUSCH (i.e., P-CSI PUCCH + pure PUSCH).
   C. If HARQ-ACK, a P-CSI, and a PUSCH overlap at the same time, the UE may simultaneously transmit HARQ-ACK on PUCCH and a PUSCH piggybacked with a CSI (i.e., HARQ-ACK on PUCCH + P-CSI on PUSCH).

In NR URLLC, a plurality of different priorities (e.g., LP or HP) may be configured/indicated for each UCI type (e.g., HARQ-ACK (A/N), SR, or CSI) transmission and/or each UL channel (e.g., PUCCH or PUSCH) transmission, and in this situation, there may be a need to define a detailed UE/BS operation for PUCCH+PUSCH simultaneous transmission (e.g., on which UL channel a UCI of a certain type and/or a UCI of a certain priority is to be transmitted).

Hereinafter, the present disclosure proposes a PUCCH+PUSCH simultaneous transmission operation method (for a PUCCH and a PUSCH configured/indicated at the same time (e.g., the same slot, the same sub-slot, or the same symbol) in a situation in which a plurality of different priorities are configured/indicated for each UCI type and/or UL channel. The proposed method may also be applied to a situation in which the same priority is configured/indicated for each UCI type and/or UL channel (or there is no separate priority configuration/indication).

For convenience of description below, a specific priority is defined as XP, and a priority different from the corresponding XP is defined as YP. For example, when XP = LP, this means YP = HP, and as another example, when XP = HP, this means YP = LP. In an example in which priority is configured/defined as two or more priorities, if XP = first Priority, this means all or at least one of the remaining priority(s) except for YP = first Priority, and vice versa.

Hereinafter, the meaning that a first signal and a second signal are configured/indicated at the same time includes, but is limited to, that a resource for the first signal and a resource for the second signal completely overlap in the time domain. For example, when the resource for the first signal and the resource for the second signal overlap at least partially in the time domain, the first signal and the second signal may be understood as being configured/indicated/scheduled at the same time. In addition, hereinafter, specific channel/signal transmission of a UE may be interpreted as specific channel/signal reception of a BS.

### [Proposal 1]

As an example related to UE/BS operations according to Proposal 1, the case in which an XP PUCCH and an XP PUSCH are configured/indicated at the same time, or the case in which a PUCCH and a PUSCH, of which a separate priority is not configured/indicated, are configured/indicated at the same time may be considered (here, the XP PUSCH may mean the case in which only the XP PUSCH exists without the YP PUSCH, or may mean the case in which the XP PUSCH is selected/determined as a PUSCH to be piggybacked by a UCI).
1) Basically, similar to the existing PUCCH + PUSCH simultaneous transmission operation, the following operation may be applied/performed (this is referred to as "Per-UCI mux 1").
   A. When a PUCCH carrying HARQ-ACK information (hereinafter referred to as A/N PUCCH) and a PUSCH overlap, the UE may transmit A/N on a PUCCH and simultaneously transmit a pure PUSCH (without A/N piggyback).
   B. When a P-CSI PUCCH and a PUSCH overlap, the UE may transmit a P-CSI on a PUCCH and simultaneously transmit a pure PUSCH (without P-CSI piggyback).
   C. When an A/N PUCCH, a P-CSI PUCCH, and a PUSCH overlap, the UE may transmit A/N on a PUCCH and simultaneously piggyback and transmit a P-CSI on a PUSCH.
2) As another method, the following operation may be applied/performed in consideration of a CSI configured with two parts (i.e., CSI part 1/2) (this is referred to as "Per-UCI mux 2").
   A. When an A/N PUCCH is not present:
      - Opt 1) The UE may transmit CSI part 1 (and SR) on a PUCCH and simultaneously piggyback and transmit CSI part 2 on a PUSCH.
      - Opt 2) The UE may transmit both the CSI parts 1/2 (and SR) on a PUCCH and simultaneously transmit a pure PUSCH (without CSI piggyback).
   B. When an A/N PUCCH is present:
      - Opt 1) The UE may transmit A/N and the CSI part 1 (and SR) on a PUCCH and may piggyback and transmit the CSI part 2 on a PUSCH.
      - Opt 2) The UE may transmit only A/N (and SR) on a PUCCH and may piggyback and transmit both the CSI parts 1/2 on a PUSCH.
3) In relation to UCI transmission on a PUSCH in the existing NR system, a reserved RE(s) is defined. When a UCI to be transmitted exceeds 2 bits, rate matching is performed, and when the UCI is equal to or less than 2 bits, the reserved RE(s) may be punctured for UCI transmission. However, according to an embodiment of the present disclosure, in this way, the (existing) reserved RE set corresponding to A/N of 2-bit or less, which is reserved on a PUSCH (e.g., REs on the earliest non-DMRS symbol after a first DMRS symbol) may not be needed, and accordingly, when PUCCH+PUSCH simultaneous transmission is configured to ON (always regardless of actual existence of A/N of 2-bit or less), the corresponding reserved A/N RE set may not be reserved on a PUSCH (e.g., in the form of determining/applying 0 Res).
   A. Application of the above UE operation may not be limited to the case in which only UL channels (e.g., an XP PUCCH and a YP PUSCH carrying XP HARQ-ACK) having the same priority at the same time point are configured/indicated. For example, even when UL channels having different priorities are configured/indicated at the same time point, the above UE operation may be applied. Alternatively, application of the UE operation may be limited to the case in which UL channels (e.g., XR HARQ-ACK PUCCH or YP PUSCH) having different priorities at the same time point are configured/indicated.
   B. For example, the above UE operation may be limited to a PUSCH transmitted on other cells (or other frequency bands other than a frequency band in which a PUCCH cell is configured) other than a cell (i.e., PUCCH cell) (or a frequency band in which the corresponding PUCCH cell is configured) configured/indicated to perform PUCCH transmission. For example, the UE may operate to piggyback (multiplex) and transmit A/N on the corresponding PUSCH in the same way as the existing case in the case of a PUSCH transmitted on a PUCCH cell (or a frequency band in which the corresponding PUCCH cell is configured), and accordingly, an operation of reserving a reserved RE set corresponding to A/N of 2-bit or less on the corresponding PUSCH as in the existing case may be applied.
4) When an (XP) PUCCH configured at the same time as an (XP) PUSCH is configured/indicated with an HP while including SR transmission (e.g., XP = HP), the UE may operate to simultaneously transmit the corresponding SR PUCCH and (XP) PUSCH (irrespective of whether Buffer Status Report (BSR) is included in the (XP) PUSCH).
   A. Application of the above UE operation may not be limited to the case in which only UL channels (e.g., an XP PUCCH and a YP PUSCH carrying an XP SR) having the same priority at the same time are configured/indicated. For example, even when UL channels having different priorities are configured/indicated at the same time point, the above UE operation may be applied. Alternatively, application of the UE operation may be limited to the case in which UL channels (e.g., XP SR PUCCH or YP PUSCH) having different priorities at the time pint are configured/indicated.
   B. For example, when there is an XP SR PUCCH (or an XP PUCCH in which the corresponding XP SR is multiplexed) configured with an XP on a specific cell (or specific frequency band) and there is a YP PUSCH that overlaps with the XP SR PUCCH in time and is configured/indicated with a YP on other cells (or other frequency bands), the UE may operate to simultaneously transmit the corresponding XP SR PUCCH and YP PUSCH. If the XP SR PUCCH and the YP PUSCH overlap in time on the same cell (or the same frequency band), to perform only transmission of a channel with a higher priority among the two channels, and to drop transmission of a channel with a lower priority.
   C. More specifically, there is an HP SR PUCCH (or HR PUCCH in which the corresponding HP SR is multiplexed) configured with an HP on a specific cell (or specific frequency band) and there is an LP PUSCH that overlaps with the HP SR PUCCH in time and is configured/indicated with an LP on other cells (or other frequency bands), the UE may operate to simultaneously transmit the corresponding HP SR PUCCH and LP PUSCH. If the HP SR PUCCH and the LP PUSCH overlap in time on the same cell (or the same frequency band), only transmission of an HP SR PUCCH having a higher priority among two channels may be performed, and transmission of an LP PUSCH having a lower priority may be dropped. Unlike this, when there is an LP SR PUCCH (LR PUCCH in which the corresponding LP SR is multiplexed) configured with an LP on a specific cell (or specific frequency band), and there is an HP PUSCH that overlaps with the LP SR PUCCH in time and is configured/indicated with an HP on the same cell or different cells (or the same frequency band or different frequency bands), the UE may operate to perform only transmission of an HP PUSCH with a higher priority among two channels and to drop transmission of an LP SR PUCCH with a lower priority.

### [Proposal 2]

As an example related to UE/BS operations according to Proposal 2, (i) the case in which an XP PUCCH and a YP PUSCH are configured/indicated at the same time, and/or (ii) the case in which an XP PUCCH, a YP PUCCH, and a YP PUSCH are configured/indicated at the same time may be considered (here, the YP PUSCH may mean the case in which only the YP PUSCH exists without the XP PUSCH or the case in which the YP PUSCH is selected/determined as a PUSCH to be piggybacked by a UCI).
1) When the XP PUCCH and the YP PUSCH are configured/indicated at the same time, the following operation may be applied/performed for PUCCH+PUSCH simultaneous transmission.
   A. Opt 1: The UE may transmit an XP UCI on an XP PUCCH and simultaneously transmit a pure YP PUSCH (without UCI piggyback) (in this case, all of XP A/N, an XP SR, and an XP P-CSI may be transmitted, whereas a PUSCH may be transmitted without any UCI piggyback).
   B. Opt 2: The UE may perform PUCCH+PUSCH simultaneous transmission based on a Per-UCI mux 1 or Per-UCI mux 2 method. For example, when A/N is present, XP A/N (and XP SR) may be transmitted on an XP PUCCH, and an XP CSI may be piggybacked and transmitted on a YP PUSCH. In contrast, when there is no A/N, the XP P-CSI (and XP SR) may be transmitted on the XP PUCCH, and the YP PUSCH may be transmitted without any UCI piggyback.
   C. Opt 3: If XP = HP, the UE may transmit an XP UCI on a PUCCH, and if XP = LP, the UE may piggyback and transmit the XP UCI on a PUSCH (in this case, all of HP A/N, an HP SR, and an HP P-CSI may be transmitted on a PUCCH, whereas all of an LP A/N, an LP SR, and an LP CSI may be transmitted on a PUSCH). For example, the same LP/HP may be configured in all of A/N, an SR, and a CSI included in the corresponding UCI.
2) When an XP PUCCH, a YP PUCCH, and a YP PUSCH are configured/indicated at the same time, the following operation may be applied/performed for PUCCH+PUSCH simultaneous transmission.
   A. Opt 1: The UE may transmit an XP UCI on an XP PUCCH and may piggyback and transmit a YP UCI on a YP PUSCH (in this case, all of XP A/N, an XP SR, and an XP P-CSI may be transmitted on a PUCCH, whereas all of a YP A/N, a YP SR, and a YP CSI may be transmitted on a PUSCH).
   B. Opt 2: PUCCH+PUSCH simultaneous transmission may be performed based on a Per-UCI mux 1 or Per-UCI mux 2 method (e.g., when A/N is present, XP A/N (and XP SR) and YP A/N (and a YP SR) may be transmitted on a PUCCH, and an XP CSI and a YP CSI may be transmitted on a PUSCH. In contrast, when A/N is not present, an XP P-CSI (and XP SR) and a YP P-CSI (and YP SR) may be transmitted on a PUCCH, and a PUSCH may be transmitted without any UCI piggyback).
   C. Opt 3: The UE may transmit an HP UCI on a PUCCH and may piggyback and transmit an LP UCI on a PUSCH (in this case, all of HP A/N, an HP SR, and an HP P-CSI may be transmitted on a PUCCH, whereas all of LP A/N, an LP SR, and an LP CSI may be transmitted on a PUSCH). For example, the same LP/HP may be configured in all of A/N, an SR, and a CSI included in the corresponding UCI.
3) According to whether multiplexing between UCIs configured/indicated with different priorities on the same on PUCCH/PUSCH and/or multiplexing between UL channels are allowed (ON/OFF configuration), Opt 1/2 methods may be applied/performed in different ways.
   A. For example, when multiplexing between the different priority information/channel/signals is configured to OFF, one method of Opt 1/3 may be applied/performed (or one method of Opt 1/3 is configured for a UE). In contrast, when multiplexing between the different priority information/channel/signals is configured to ON, a method of Opt 2 may be applied/performed (or one method of Opt 1/2/3 is configured for the UE).
   B. For example, independently from (irrespective of) ON/OFF configuration for multiplexing between the different priority information/channel/signals, one of Opt 1/2/3 above may be configured for the UE.
4) Whether a PUCCH transmission cell is a cell on a licensed band (Case 1-L) or a cell on an unlicensed band (Case 1-U) and/or whether PUSCH transmission is performed only on a cell on a licensed band (or is performed on a cell on a licensed band) (Case 2-L) or is performed on a cell on an unlicensed band (or is performed on a cell on an unlicensed band) (Case 2-U), Opt 1/2/3 methods may be applied/performed in different ways.
   A. For example, in Case 1-L and/or Case 2-U (or Case 2-L) above, the Opt 2 method may be applied/performed (or configured for the UE), whereas in Case 1-U and/or Case 2-U, one method of Opt 1/2/3 may be applied/performed (or configured for the UE).
   B. In another example, independently from (irrespective of) a combination of of the PUCCH cell and a PUSCH cell, one method of Opt 1/2/3 above may be configured for the UE.

### [Proposal3]

For example, not only a PUCCH + PUSCH simultaneous transmission operation may be enabled for a PUCCH and a PUSCH having different priorities, but also a UL channel (e.g., PUCCH or PUSCH) multiplexing transmission operation between an LP and an HP may be enabled, and Proposal 3 proposes UE/BS operations related thereto.

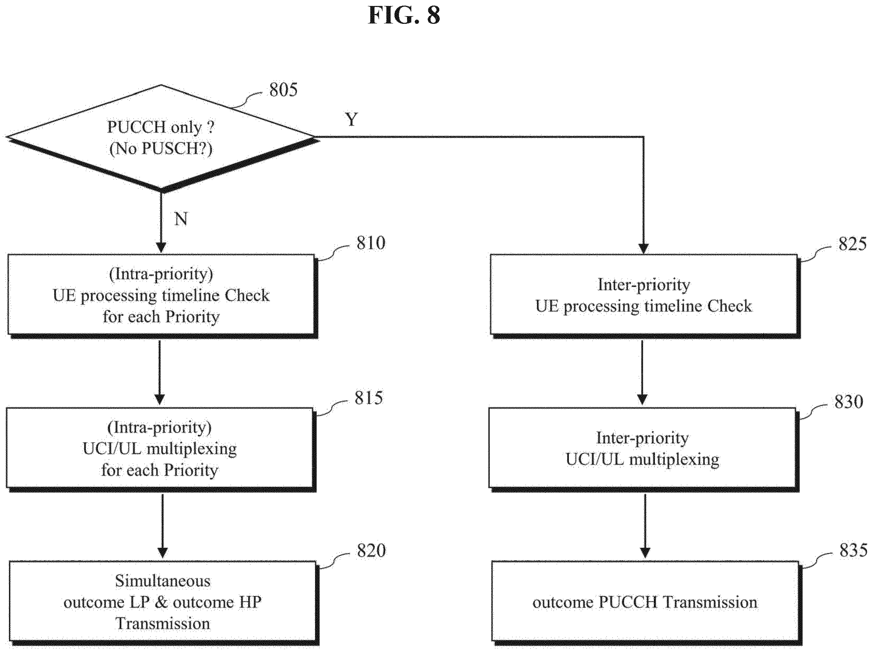

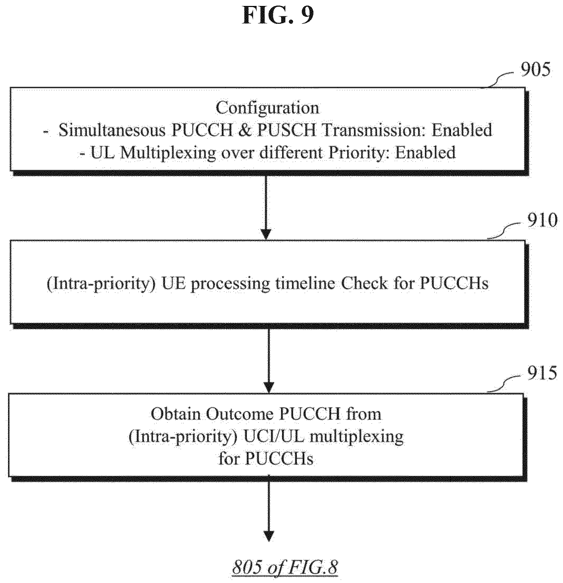

A PUCCH and a PUSCH, which are targets of simultaneous transmission of a UE in the present disclosure, including Proposal 3, may be limited to a PUCCH and a PUSCH having different priorities on different cells or different frequency bands. In the case of a PUCCH and a PUSCH in the same cell or same frequency band (with different priorities), according to whether to enable/disable the UL channel multiplexing transmission operation between an LP and an HP, (when the UL channel multiplexing transmission operation is enabled,) a UCI of the corresponding PUCCH may be piggybacked (multiplexed) and transmitted to the PUSCH or (when the UL channel multiplexing transmission operation is disabled,) only transmission of a channel with a higher priority may be performed and transmission of a channel with a lower priority may be dropped among two channels.
1) An existing Rel-16 UE may check whether a UE processing timeline (e.g., N1 that is a minimum processing time between a PDSCH (ending symbol) reception time and a corresponding HARQ-ACK (starting symbol) transmission time, and/or N2 that is a minimum processing time between a PDCCH (ending symbol) reception time and a corresponding PUSCH/PUCCH (starting symbol) transmission time) related to transmission of a PUCCH/PUSCH in the same priority is satisfied, may perform a UCI/UL multiplexing process (of merging (multiplexing) a plurality of PUCCH/PUSCHs overlapping in time to one UL channel) (i.e., check a UE processing timeline for each same priority, and perform the UCI/LTL multiplexing process for each same priority), and may acquire LP outcome and HP outcome corresponding to the multiplexing result. If the LP outcome PUCCH/PUSCH acquired in this way overlaps in time with the HP outcome PUCCH/PUSCH, LP PUCCH/PUSCH transmission may be dropped and only the HP PUCCH/PUSCH may be transmitted.
2) According to an embodiment of the present disclosure (e.g., in the future NR standard), when a UL channel multiplexing transmission operation between an LP and a HP is enabled (in a state in which a PUCCH + PUSCH simultaneous transmission operation is disabled), the UE may check a UE processing timeline (i.e., for inter-priority) between DL channels (e.g., PDSCH/PDCCH) and UL channels (e.g., PUCCH/PUSCH) having the same priority as well as different priorities, may perform a UCI/UL multiplexing process, and may finally transmit an outcome PUCCH/PUSCH corresponding to the UCI/LTL multiplexing result between an LP and an HP.
3) According to an embodiment of the present disclosure (e.g., in the future NR standard), both of (i) a PUCCH+PUSCH simultaneous transmission operation (for a PUCCH and a PUSCH having different priorities) and (ii) a UL multiplexing transmission operation between an LP and an HP may be enabled. In this case, the following UE operation may be performed/applied according to a combination of temporally overlapping UL channels (e.g., PUCCH and / or PUSCH) (with different priorities). (I the following (and in the above Proposals), when a plurality of UL channels overlap in time, this means that resources of the corresponding UL channels overlap on the same OFDM symbol, or (even if a plurality of UL channels do not overlap at an OFDM symbol level) resources of the corresponding UL channels are included in the same slot (or sub-slot) period.)
4) Opt 1
   A. When there is at least one PUSCH (e.g., XP PUSCH) among UL channels that overlap in time while having different priorities (e.g., 805 in FIG. 8, No), the UE may operate to perform only the above process of checking a UE processing timeline for the same priority (810) and the process of UCI/UL multiplexing (815) (i.e., to drop a process of checking UE processing timeline for the inter-priority and a UCI/LTL multiplexing process), and the UE may perform simultaneous transmission on the outcome LP PUCCH/PUSCH and outcome HP PUCCH/PUSCH corresponding to the multiplexing result (820).
      i. The (overlapping in time) UL channel combinations corresponding to the above cases (810, 815, and 820 in FIG. 8) may include at least one of the following cases.
         1. Case 1: XP PUSCH + YP PUCCH
         2. Case 2: XP PUSCH + YP PUCCH + XP PUCCH
         3. Case 3: XP PUSCH + YP PUCCH + YP PUSCH
         4. Case 4: XP PUSCH + YP PUCCH + XP PUCCH + YP PUSCH
      ii. For example, in Case 1, the UE may perform simultaneous transmission on XP PUSCH + YP PUCCH.
      iii. For example, in Case 2, the UE may perform a processing time check and multiplexing on an XP PUSCH and an XP PUCCH (810 and 815) and thus may acquire a multiplexed (outcome) XP signal (e.g., an XP PUSCH to which an XP PUCCH is piggybacked). The UE may simultaneously transmit the corresponding (outcome) XP signal and YP PUCCH (820).
      iv. For example, in Case 3, the UE may perform a processing time check and multiplexing on a YP PUSCH and a YP PUCCH (810 and 815) and thus may acquire a multiplexed (outcome) YP signal (e.g., a YP PUSCH to which a YP PUCCH is piggybacked). The UE may simultaneously transmit the corresponding (outcome) YP signal and XP PUSCH (820).
      v. For example, in Case 4, the UE may perform a processing time check and multiplexing on an XP PUSCH and an XP PUCCH (815 and 815) and thus may acquire a multiplexed (outcome) XP signal (e.g., an XP PUSCH to which an XP PUCCH is piggybacked). The UE may perform a processing time check and multiplexing on a YP PUSCH and a YP PUCCH (815 and 815) and thus may acquire a multiplexed (outcome) YP signal (e.g., a YP PUSCH to which a YP PUCCH is piggybacked). The UE may simultaneously transmit the corresponding (outcome) XP signal and the corresponding (outcome) YP signal (820).
   B. Otherwise, when there are only PUCCH(s) (no PUSCH) in UL channels having different priorities and overlapping in time (e.g., Case 5: XP PUCCH + YP PUCCH) (e.g., 805 of FIG. 8, Yes), (the range of UE processing timeline check and UCI/UL multiplexing process is not limited to the same priority), and the UE may operate to (simultaneously) perform a UE processing timeline check (825) and UCI/UL multiplexing process (830) for an inter-priority, and may transmit an outcome PUCCH corresponding to the UCI/UL multiplexing result between an LP and an HP (830).
5) Opt 2
   A. (For a PUCCH and a PUSCH having different priorities) in a state in which both a PUCCH+PUSCH simultaneous transmission operation and a UL multiplexing transmission operation between an LP and an HP are enabled (e.g., 905 in FIG. 9), the UE may first perform the above UE processing timeline check for the same priority (e.g., 910) and the UCI/UL multiplexing process only on PUCCHs for each priority (except for a PUSCH) to generate outcome PUCCHs (e.g., LP outcome PUCCH and HP outcome PUCCH) (for each priority) (e.g., 915).

Then, when there is at least one PUSCH (e.g., XP PUSCH) among UL channels that overlap in time while having different priorities (by applying Opt 1 above) for all remaining UL channels including the corresponding outcome PUCCHs (e.g., 805 in FIG. 8, No), the UE may operate to perform only the UE processing timeline check (810) and UCI/UL multiplexing process (815) for the same priority (i.e., to drop the UE processing timeline check and the UCI/UL multiplexing process for the inter-priority).

The UE may perform simultaneous transmission on the outcome LP PUCCH/PUSCH and the outcome HP PUCCH/PUSCH that are acquired as the result of the UE processing timeline check and the UCI/U multiplexing for each priority (820).
i. The (overlapping in time) UL channel combinations corresponding to the following cases may include at least one of the following cases.
   1. Case 1: XP PUSCH + YP (outcome) PUCCH
   2. Case 2: XP PUSCH + YP (outcome) PUCCH + XP (outcome) PUCCH
   3. Case 3: XP PUSCH + YP (outcome) PUCCH + YP PUSCH
   4. Case 4: XP PUSCH + YP (outcome) PUCCH + XP (outcome) PUCCH + YP PUSCH
ii. For example, in Case 1, the UE may perform simultaneous transmission on XP PUSCH + YP (outcome) PUCCH. The YP (outcome) PUCCH may be acquired through the processing time check and multiplexing (910 and 915) for at least one or two or more YP PUCCHs.
iii. For example, in Case 2, the YP (outcome) PUCCH may be acquired through the processing time check and multiplexing (910 and 915) on at least one or two or more YP PUCCHs. The XP (outcome) PUCCH may be acquired through the processing time check and multiplexing (910 and 915) on at least one or two or more XP PUCCHs. The UE may perform the processing time check and multiplexing (815 and 815) on the XP PUSCH and the XP (outcome) PUCCH and thus may acquire a multiplexed XP signal (e.g., an XP PUSCH to which an XP (outcome) PUCCH is piggybacked). The UE may simultaneously transmit the corresponding XP signal and YP (outcome) PUCCH (820).
iv. For example, in Case 3, the YP (outcome) PUCCH may be acquired through the processing time check and multiplexing (910 and 915) for at least one or two or more YP PUCCHs. The UE may perform the processing time check and multiplexing (815 and 815) on the YP PUSCH and the YP (outcome) PUCCH and thus may acquire a multiplexed YP signal (e.g., a YP PUSCH to which a YP (outcome) PUCCH is piggybacked). The UE may simultaneously transmit the corresponding YP signal and XP PUSCH (820).
v. For example, in Case 4, the YP (outcome) PUCCH may be acquired through the processing time check and multiplexing (910 and 915) on at least one or two or more YP PUCCHs. The XP (outcome) PUCCH may be acquired through the processing time check and multiplexing (910 and 915) on at least one or two or more XP PUCCHs. The UE may perform the processing time check and multiplexing (810 and 815) on the XP PUSCH and the XP (outcome) PUCCH and thus may acquire a multiplexed XP signal (e.g., an XP PUSCH to which an XP (outcome) PUCCH is piggybacked). The UE may perform the processing time check and multiplexing (810 and 815) on the YP PUSCH and the YP (outcome) PUCCH and thus may acquire a multiplexed YP signal (e.g., a YP PUSCH to which a YP (outcome) PUCCH is piggybacked). The UE may simultaneously transmit the corresponding XP signal and the corresponding YP signal (820).

B. Otherwise, when there is only a PUCCH (no PUSCH) in UL channels having different priorities and overlapping in time (by applying Opt 1 in a state in which the outcome PUCCHs are included) (e.g., Case 5: XP (outcome) PUCCH + YP (outcome) PUCCH), the UE may operate to (simultaneously) perform the UE processing timeline check (825) and the UCI/UL multiplexing process (830) not only for the same priority but also for the inter-priority, and may transmit (one) outcome PUCCH corresponding to the UCI/UL multiplexing result between an LP and an HP (835).

6) In addition, when the PUCCH+PUSCH simultaneous transmission operation (between a PUCCH and a PUSCH having different priorities) is disabled and a UL multiplexing transmission operation between an LP and an HP is enabled, the UE processing timeline check and the UCI/LTL multiplexing process may be simultaneously performed for both the same priority and the inter-priority (i.e., in a single step), whereas when the PUCCH+PUSCH simultaneous transmission operation is enabled and the UL multiplexing transmission operation between an LP and an HP is also enabled, Step 1) as a first step, the UE processing timeline check and the UCI/LTL multiplexing process may first performed for the same priority (e.g., when the current case corresponds to the Case 1/2/3/4, only the first step may be performed, and the following second step may be dropped), and Step 2) as the next (e.g., when the current case corresponds to the Case 5) second step, the UE may operate to additionally perform the UE processing timeline check and the UCI/LTL multiplexing process for the inter-priority.

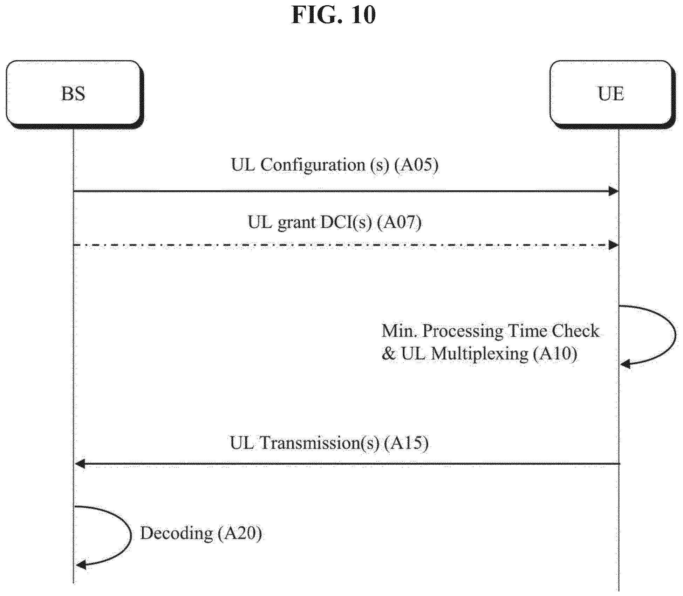

FIG. 10 shows an example of a method of transmitting and receiving a signal according to at least some of Proposals 1 to 3 above. FIG. 10 is to help understanding of the above-described Proposals, and the scope of the present disclosure is not limited to FIG. 10. Repeated descriptions above may be omitted, and the above description may be referred to as necessary.

Referring to FIG. 10, a BS may transmit configuration for uplink to a UE (e.g., higher layer signaling) (A05). The BS may configure the UE to perform simultaneous transmission of physical uplink control channel (PUCCH)-physical uplink control channel (PUSCH) to the UE and to multiplex uplink channels having different priorities through the configuration for uplink.

The UE may multiplex a plurality of uplink channels that satisfy the minimum processing time supported by the UE for uplink transmission (A10). When the plurality of uplink channels are multiplexed, based on that the UE is configured to perform simultaneous transmission of physical uplink control channel (PUCCH)-physical uplink control channel (PUSCH) and to multiplex uplink channels having different priorities, the UE may acquire a first PUCCH by multiplex PUCCHs having the same first priority among the plurality of uplink channels and may acquire the at least one uplink signal based on the remaining channel among the plurality of uplink channels and the first PUCCH.

The UE may transmit at least one uplink signal based on multiplexing of the plurality of uplink channels (A15). The BS may receive at least one uplink signal from the UE based on the configuration for uplink. The at least one uplink signal received by the BS may be a signal in which a plurality of uplink channels that satisfy the minimum processing time supported by the UE, are multiplexed.

For example, the UE may acquire a second PUCCH by multiplexing PUCCHs having the same second priority and may acquire the at least one uplink signal based on the first PUCCH and the second PUCCH.

For example, the UE may acquire a single final PUCCH from the first PUCCH with the first priority and the second PUCCH with the second priority based on that a PUSCH of any priority is not included in the plurality of uplink channels.

For example, when the plurality of uplink channels are multiplexed, the UE may acquire a first PUSCH to which the first PUCCH is piggybacked based on that at least one PUSCH having the first priority is included in the plurality of uplink channels.

For example, the UE may simultaneously transmit the first PUSCH having the first priority and a channel having the second priority.

For example, the channel having the second priority may be a PUCCH, and the UE may simultaneously transmit the first PUSCH having the first priority and a PUCCH having the second priority.

For example, the channel having the second priority may be a PUSCH, and the UE may simultaneously transmit the first PUSCH having the first priority and a PUSCH having the second priority.

For example, at least one PUCCH having the second priority may be piggybacked to the PUSCH having the second priority.

For example, the UE may be configured to perform simultaneous transmission of PUCCH-PUSCH having different priorities.

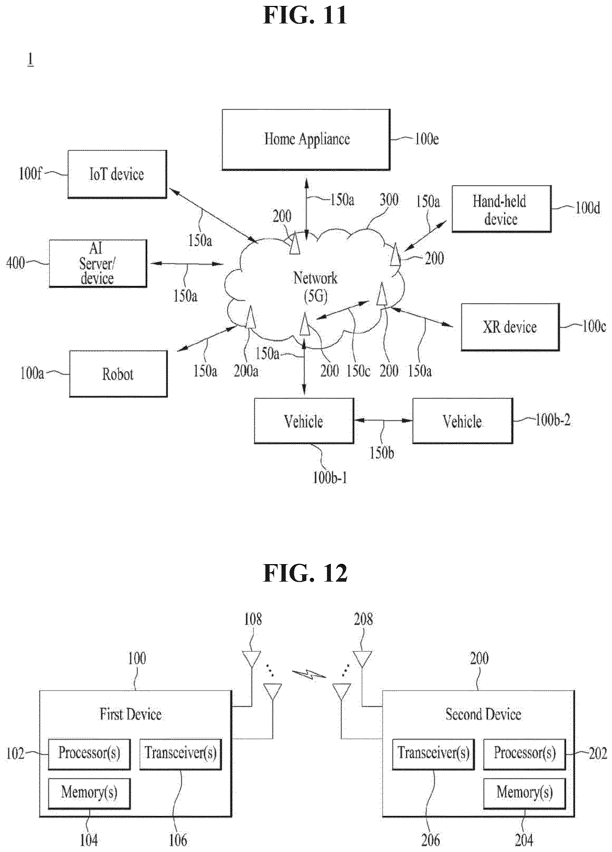

FIG. 11 illustrates a communication system 1 can be applied to the present disclosure.

Referring to FIG. 11, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 12 illustrates wireless devices applicable to the present disclosure.

Referring to FIG. 12, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 11.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

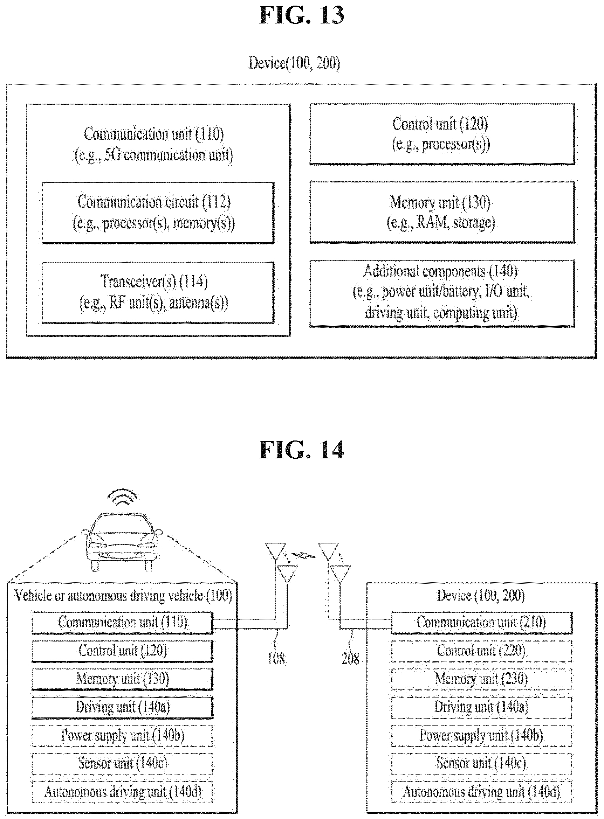

FIG. 13 illustrates another example of a wireless device applied to the present disclosure. The wireless device may be implemented in various forms according to a use-case/service (refer to FIG. 11).

Referring to FIG. 13, wireless devices 100 and 200 may correspond to the wireless devices 100 and 200 of FIG. 12 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 12. For example, the transceiver(s) 114 may include the one or more transceivers 106 and 206 and/or the one or more antennas 108 and 208 of FIG. 12. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 11), the vehicles (100b-1 and 100b-2 of FIG. 11), the XR device (100c of FIG. 11), the hand-held device (100d of FIG. 11), the home appliance (100e of FIG. 11), the IoT device (100f of FIG. 11), a digital broadcast terminal, a hologram device, a public safety device, an MTC device, a medicine device, a fintech device (or a finance device), a security device, a climate/environment device, the AI server/device (400 of FIG. 11), the BSs (200 of FIG. 11), a network node, etc. The wireless device may be used in a mobile or fixed place according to a use-example/service.

In FIG. 13, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 14 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 13, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

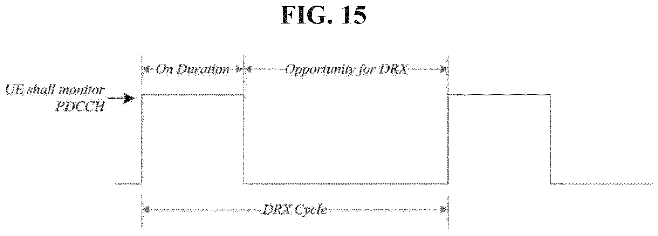

FIG. 15 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC INACTIVE state, and an RRC CONNECTED state. The UE performs DRX to receive a paging signal discontinuously in the RRC_IDLE state and the RRC INACTIVE state. DRX in the RRC CONNECTED state (RRCCONNECTED DRX) will be described below.

Referring to FIG. 15, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 6 describes a DRX operation of a UE (in the RRC_CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

**[Table 6]**

| | Type of signals | UE procedure |
|---|---|---|
| 1^{st} step | RRC signalling (MAC-Cell GroupConfig) | - Receive DRX configuration information |
| 2^{nd} Step | MAC CE ((Long) DRX command MAC CE) | - Receive DRX command |
| 3^{rd} Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### Industrial Applicability

The present disclosure is applicable to UEs, BSs, or other apparatuses in a wireless mobile communication system.

## Claims

1. A method of transmitting a signal by a user equipment (UE) in a wireless communication system, the method comprising:
multiplexing a plurality of uplink channels that satisfy a minimum processing time supported by the UE for uplink transmission; and
transmitting at least one uplink signal based on the multiplexing of the plurality of uplink channels,
wherein, in the multiplexing of the plurality of uplink channels, based on that simultaneous transmission of physical uplink control channel (PUCCH)-physical uplink control channel (PUSCH) is configured in the UE and multiplexing of uplink channels having different priorities is configured, the UE:
acquires a first PUCCH by multiplexing PUCCHs having a same first priority among the plurality of uplink channels and
acquires the at least one uplink signal based on a remaining channel among the plurality of uplink channels and the first PUCCH.

2. The method of claim 1, wherein, in the multiplexing of the plurality of uplink channels, the UE:
acquires a second PUCCH by multiplexing PUCCHs having the same second priority and
acquires the at least one uplink signal based on the first PUCCH and the second PUCCH.

3. The method of claim 2, wherein, in the multiplexing of the plurality of uplink channels,
based on that a PUSCH of any priority is not included in the plurality of uplink channels, the UE acquires a single final PUCCH from a first PUCCH of the first priority and a second PUCCH of the second priority.

4. The method of claim 1, wherein, in the multiplexing of the plurality of uplink channels,
based on that at least one PUSCH having the first priority is included in the plurality of uplink channels, the UE acquires a first PUSCH to which the first PUCCH is piggybacked.

5. The method of claim 4, wherein, in the transmitting of the at least one uplink signal,
the UE simultaneously transmits the first PUSCH having the first priority and a channel having a second priority.

6. The method of claim 5,
wherein the channel having the second priority is a PUCCH; and
wherein the UE simultaneously transmits the first PUSCH having the first priority and a PUCCH having the second priority.

7. The method of claim 5,
wherein the channel having the second priority is a PUSCH; and
wherein the UE simultaneously transmits the first PUSCH having the first priority and a PUSCH having the second priority.

8. The method of claim 7, wherein at least one PUCCH having the second priority is piggybacked to the PUSCH having the second priority.

9. The method of claim 1, wherein the UE is configured to perform the simultaneous transmission of PUCCH-PUSCH having different priorities.

10. A processor-readable recording medium having recorded thereon instructions for executing the method of claim 1.

11. A device for controlling a user equipment (UE) for wireless communication, comprising:
a memory configured to record instructions; and
a processor configured to perform operations by executing the instructions,
wherein the operations of the processor include multiplexing a plurality of uplink channels that satisfy a minimum processing time supported by the UE for uplink transmission, and transmitting at least one uplink signal based on the multiplexing of the plurality of uplink channels; and
wherein, in the multiplexing of the plurality of uplink channels, based on that simultaneous transmission of physical uplink control channel (PUCCH)-physical uplink control channel (PUSCH) is configured in the UE and multiplexing of uplink channels having different priorities is configured, the processor:
acquires a first PUCCH by multiplexing PUCCHs having a same first priority among the plurality of uplink channels and
acquires the at least one uplink signal based on a remaining channel among the plurality of uplink channels and the first PUCCH.

12. A user equipment (UE) for wireless communication, comprising:
a transceiver; and
a processor configured to multiplex a plurality of uplink channels that satisfy a minimum processing time supported by the UE for uplink transmission and transmit at least one uplink signal through the transceiver based on the multiplexing of the plurality of uplink channels,
wherein, in the multiplexing of the plurality of uplink channels, based on that simultaneous transmission of physical uplink control channel (PUCCH)-physical uplink control channel (PUSCH) is configured in the UE and multiplexing of uplink channels having different priorities is configured, the processor:
acquires a first PUCCH by multiplexing PUCCHs having a same first priority among the plurality of uplink channels and
acquires the at least one uplink signal based on a remaining channel among the plurality of uplink channels and the first PUCCH.

13. A method of receiving a signal by a base station (BS) in a wireless communication system, the method comprising:
transmitting configuration for uplink to a user equipment (UE) via higher layer signaling; and
receiving at least one uplink signal from the UE based on the configuration for uplink,
wherein the at least one received uplink signal is multiplexed for a plurality of uplink channels that satisfy a minimum processing time supported by the UE; and
wherein, based on that, through the configuration for uplink, simultaneous transmission of physical uplink control channel (PUCCH)-physical uplink control channel (PUSCH) is configured in the UE and multiplexing of uplink channels having different priorities is configured, the BS acquires a first PUCCH in which PUCCHs having a same first priority among the plurality of uplink channels are multiplexed.

14. A base station (BS) for wireless communication, comprising:
a transceiver; and
a processor configured to control the transceiver to transmit configuration for uplink to a user equipment (UE) via higher layer signaling and to receive at least one uplink signal from the UE based on the configuration for uplink,
wherein the at least one received uplink signal is multiplexed for a plurality of uplink channels that satisfy a minimum processing time supported by the UE; and
wherein, based on that, through the configuration for uplink, simultaneous transmission of physical uplink control channel (PUCCH)-physical uplink control channel (PUSCH) is configured in the UE and multiplexing of uplink channels having different priorities is configured, the processor acquires a first PUCCH in which PUCCHs having a same first priority among the plurality of uplink channels are multiplexed.
